# EUROPEAN PATENT APPLICATION

(11) **EP 3 901 484 A1**
(43) Date of publication of application: **27.10.2021**
(21) Application number: 21164930.6
(22) Date of filing: 25.03.2021
(51) Int. Cl.: F16D 3/60, F16D 3/72, F16D 3/52

(54) **YIELDING COUPLINGS WITH WIRES AS INTERMEDIATE MEMBERS**

(30) Priority: 26.04.2020 PL 43366820
(71) Applicant: Hamilton Sundstrand Corporation, Charlotte, NC 28217-4578 (US)
(72) Inventor: SAWICKI, Piotr, 51-317 Wroclaw (PL); WNUCZKO, Mateusz, 51-317 Wroclaw (PL)
(74) Representative: Dehns

(57) **Abstract**

A coupling (12) suitable for use in a flexible shaft (8) comprises a first and second shaft engagement means (18, 20) each having a central axis (A), a spacer means (22) having a central axis (A), and a number of support wires (24), in which a first set (36) of support wires (24) each extend between the first shaft engagement means (18) and the spacer means (22) one or more times, the first set (36) of support wires (24) comprises at least one support wire (24), and the first and second shaft engagement means (18, 20) and the spacer means (22) have a common axis (A) when the coupling means (12) is not subject to any misalignment..

## Description

This disclosure relates to flexible couplings for flexible shafts and in particular flexible couplings and associated flexible shafts suitable for use in aircraft.

### BACKGROUND

Flexible couplings and flexible shafts are used in various aircraft applications. A typical example may be a drive shaft for a helicopter tail rotor drive. Flexible couplings and flexible shafts are used in situations where successful and long term operation of each flexible coupling and the flexible shaft requires that they have the ability to accommodate axial and angular misalignments during the use and rotation of the flexible shaft. It is frequently the case that the axial and angular misalignments are constantly changing as a result of airframe vibrations and / or varying inertial loads arising during the operation and manoeuvre of the aircraft.

Flexible shafts comprise a number of longitudinally extending shaft elements joined to each other end to end by a number of flexible couplings. The flexible couplings are configured to engage with and retain the ends of the shaft elements so that the central axis (centre line) of each shaft element is substantially coaxial with the other shaft element or elements to which it is coupled when the shafts and coupling or couplings are not subject to any external forces that would cause misalignment of the shaft elements relative to each other.

Known flexible couplings for flexible shafts comprise or include first and second shaft engagement means for attachment of the shaft elements to the coupling, a spacer shaft extending between the engagement means, and a flexible diaphragm (or membrane) associated with each shaft engagement means. Each diaphragm extends between and joins its shaft engagement means and the spacer shaft. Each diaphragm is typically made from a suitable metal, such as titanium, and in use elastic bending and / or deformation of one or both diaphragms of a coupling allows angular and / or axial misalignment between shaft elements associated with the coupling without damage being caused to the shaft elements, the flexible coupling or the flexible shaft as a whole. The shaft elements are formed from an appropriate material such as an appropriate metal.

It is undesirable that the individual shaft elements flex during use and rotation of the flexible shaft because such flexure will absorb energy and may lead to premature failure of the shaft element as a result of the shaft material suffering from fatigue.

For the purposes of the present disclosure it is to be understood that reference to axial misalignment is reference to a situation where the central axes of a pair of shafts coupled together by a coupling are coaxial, but in an axial direction the position of the shafts relative to each other is not that which is desired. This generally occurs as a result of movement in an axial direction of one shaft relative to the other and leads to compression or tension in the coupling that couples the shafts to each other. It is also to be understood that reference to angular misalignment references the situation where the central axes of a pair of shafts coupled together by a coupling are not coaxial, most commonly when they are at an angle to each other.

The manufacture of the diaphragms for known flexible couplings is known to be a difficult and time consuming operation, especially when the material for the diaphragm is titanium. This is because the diaphragm needs to be made as a single, symmetrical unit without any flaws. Any lack of symmetry or flaw in a diaphragm, for example a scratch, can render the diaphragm unsuitable for use and / or lead to early failure of the diaphragm as a result of stresses and strains concentrating at specific points or regions of the diaphragm leading to failure as a result of fatigue.

### SUMMARY

According to a first aspect of the present disclosure there is provided a coupling suitable for use in a flexible shaft comprises a first and second shaft engagement means each having a central axis, a spacer means having a central axis, and a number of support wires, in which a first set of support wires each extend between the first shaft engagement means and the spacer means one or more times, the first set of support wires comprises at least one support wire, and the first and second shaft engagement means and the spacer means have a common axis when the coupling means is not subject to any misalignment.

In some embodiments of the above embodiment, a second set of support wires extend between the second shaft engagement means and the spacer means one or more times, and the second set of support wires comprises at least one support wire.

An advantage of the coupling of the above disclosure is that support wires are easier to manufacture than the diaphragms of known flexible couplings. This is because the support wires of the present disclosure are manufactured using known wire making techniques which produce very uniform results and which are relatively simple. As such, the difficulty of producing a symmetrical and flawless diaphragms can be avoided. This leads to time and cost savings in the manufacture of couplings according to the present disclosure.

The support wires are, in some embodiments, any known configuration of wire, cable, or thin rod. The support wires are, in some embodiments, single stranded, multi-stranded, or braided.

In some embodiments of the above embodiments at least one of the support wires has a first and second end, the first end of each of those support wires is anchored to the spacer means, the second end of each of those support wires is anchored to a shaft engagement means, and those wires each extend between a shaft engagement means and the spacer means once. Such support wires may be referred to as single pass support wires.

In some embodiments of these embodiments all of the support wires of one or both of the first and second set of support wires are single pass support wires and extend only once between a shaft engagement means and the spacer means.

In some embodiments of the above embodiments at least one of the support wires has a first and second end, the first end of each of those support wires is anchored to one of the spacer means or a shaft engagement means, the second end of each of those support wires is anchored to one of the spacer means or a shaft engagement means, and those wires each extend between a shaft engagement means and the spacer means more than once. Such support wires may be referred to as multiple pass support wires.

In these embodiments each of the multiple pass support wires is threaded between a shaft engagement means and the spacer means, passing through apertures in one or both the shaft engagement means and the spacer means, with the result that each of those multiple pass support wires extends between a shaft engagement means and the spacer means at least twice. In some embodiments each multiple pass support wire is gripped by a gripping means associated with one or more of the apertures through which the multiple pass support wire is threaded. The gripping by the gripping means inhibits or prevents the longitudinal movement or creep of the multiple pass support wire through the apertures.

In embodiments where one or more of the support wires are multiple pass support wires those wires may be considered for descriptive purposes to be anchored at the location where the support wire passes through an aperture in a shaft engagement means or spacer means. The portion of the support wire extending between the shaft engagement means and the spacer means for both single pass and multiple pass support wires will be referenced as the clear portion.

A further advantage of the coupling of the present disclosure is that the coupling can be configured so that here are multiple levels of redundancy in the coupling. In particular, the number of support wires in the first set of support wires can be such that if one or a small number of support wires fails the remaining support wires can continue to function and the failure of those support wires does not cause failure of the coupling as a whole. This is in contrast to known flexible couplings where failure of a diaphragm leads to failure of the coupling as a whole.

A further advantage is that the support wires can be easily inspected for damage and replaced if that is required.

The layout and spacing of the positions where the support wires are anchored to the first shaft engagement means and / or to the spacer means are such that the support wires resist any change in the positions of the first shaft engagement means and the spacer means relative to each other. This is achieved by each of the support wires being anchored so that they are not slack or are under tension when the coupling is not subject to any forces that would cause misalignment of the elements of the coupling. This has the effect that each support wire resists the movement of the first shaft engagement means away from or toward the portion of the spacer means to which it is anchored. When a number of support wires are disposed around the first shaft engagement means and extend to the spacer means this has the effect that the first shaft engagement means cannot move in any direction towards the spacer means.

In some embodiments of the present disclosure the spacing of the anchor positions around the first shaft engagement means and around the spacer means is substantially uniform. This is advantageous because it will result in the effective centre of mass for the coupling substantially coinciding with the common central axis for the coupling in a plane perpendicular to the coupling's central axis. This helps to minimise vibration when the coupling rotates around its common central axis.

The support wires of the coupling of the present disclosure also have the advantage that they can be lighter than the diaphragms used in known flexible couplings which is beneficial because the coupling will, as a result, have less inertia than a known flexible coupling. This can lead to energy savings in use which will contribute to lower total energy demand from the apparatus, for example an aircraft, in which the coupling is used.

Flexible drive shafts are generally retained in position via a number of bearings and a further benefit of a lighter coupling is that the bearings suffer lower levels of wear for flexible shafts with lower masses than higher masses.

In some embodiments of the present disclosure there is provided a coupling which comprises a rigid flange and in which the rigid flange extends between the spacer means and the second shaft engagement means. The rigid flange is rigidly connected to or integral with the spacer means and the second shaft engagement means.

The first and second, if present, set of wires is, in some embodiments, comprised of a number of wires where that number is at least in part determined by one or more of the dimensions of the coupling, the dimensions of the individual wires, the expected peak loading on the coupling when in use, the material from which the wires are formed, and the purpose for which a flexible shaft including the coupling is to be used. The number of wires is also in part determined by how many single pass support wires and how many multiple pass support wires are present.

In some embodiments of the present disclosure each of the support wires is in tension when the coupling is not subject to any forces that would cause misalignment of the coaxial elements of the coupling. In some embodiments the support wires are at a predetermined tension. In some embodiments the tension is approximately the same in each of the support wires.

In some embodiments of the present disclosure each end of the support wires is anchored to the spacer means or a shaft engagement means by an anchor means. Each anchor means is adapted to retain the support wires in the desired position, at the desired tension (if the support wires are under tension when no misalignment forces are being experienced), and to allow the removal of the support wire that it is anchoring without having to remove any of the other support wires. In some embodiments each anchor means is integral to a shaft engagement means or the spacer means. In some embodiments each anchor means is integral to the support wire. In some embodiments each anchor means is separate from the shaft engagement means and the spacer means and may be reversibly engaged with a support wire and a shaft engagement means or the spacer means.

In some embodiments of the present disclosure each anchor means is permanently attached to a shaft engagement means or the spacer means and to the end of a support wire. In such embodiments, the coupling of the present disclosure is replaced when one or more of the support wires exhibits damage or damage above a predetermined level.

In some embodiments of the present disclosure the clear portions of at least two of the support wires of the first set and / or at least two of the support wires of the second set extend radially relative to the common axis. In some embodiments the clear portions of all of the support wires in the first and / or second set of support wires extend radially relative to the common axis. Considering such embodiments in terms of a Cartesian coordinate system with mutually perpendicular X, Y and Z axes where the X axis coincides with the common axis of the flexible coupling, and the Y axis extends radially from the common axis, the clear portions of at least two of the support wires of the first set and / or at least two of the support wires of the second set extend in a direction where the X and Z coordinates remain zero and the Y coordinate changes.

In some embodiments of the present disclosure the clear portions of at least two of the support wires of the first set and / or at least two of the support wires of the second set are so orientated that they lie on a flat radially extending plane which is substantially perpendicular to the common axis and extend in a direction that is at an angle to a radial direction relative to the common axis, and that angle is an acute angle. In some embodiments the clear portions of all of the support wires in the first and / or second set of support wires are so orientated that they lie on a flat radially extending plane which is substantially perpendicular to the common axis and extend in a direction that is at an angle to the radial direction relative to the common axis, and that angle is an acute angle. Considering such embodiments in terms of a Cartesian coordinate system with mutually perpendicular X, Y and Z axes where the X axis coincides with the common axis of the flexible coupling, and the Y axis extends radially from the common axis, the clear portions of at least two of the support wires of the first set and / or at least two of the support wires of the second set extend in a direction where the X coordinate remains zero and the Y and Z coordinates change.

In some embodiments of the present disclosure the clear portions of at least two of the support wires of the first set and / or at least two of the support wires of the second set are so orientated that each one of them: lies on a flat plane on which the common axis sits and which extends in a radial direction relative to the common axis, extends in a direction that is at a second angle to a flat radially extending plane which is substantially perpendicular to the common axis, and that second angle is an acute angle. In some embodiments the clear portions of all of the support wires in the first and / or second set of support wires are so orientated that each one of them: lies on a flat plane on which the common axis sits and which extends in a radial direction relative to the common axis, extends in a direction that is at a second angle to a flat radially extending plane which is substantially perpendicular to the common axis, and that second angle is an acute angle. Considering such embodiments in terms of a Cartesian coordinate system with mutually perpendicular X, Y and Z axes where the X axis coincides with the common axis of the flexible coupling, and the Y axis extends radially from the common axis, the clear portions of at least two of the support wires of the first set and / or at least two of the support wires of the second set extend in a direction where the Z coordinate remains zero and the X and Y coordinates change.

In some embodiments of the present disclosure the clear portions of at least two of the support wires of the first set and / or at least two of the support wires of the second set are so orientated that they extend in a direction that is at a first angle to a flat plane on which the common axis sits and which extends in a radial direction relative to the common axis, and at a second angle to a radially extending flat plane which is substantially perpendicular to the common axis, and the first and second angles are both acute angles. In some embodiments the clear portions of all of the support wires in the first and / or second set of support wires are so orientated that they extend in a direction that is at a first angle to a flat plane on which the common axis sits and which extends in a radial direction relative to the common axis, and at a second angle to a radially extending flat plane which is substantially perpendicular to the common axis, and the first and second angles are both acute angles. Considering such embodiments in terms of a Cartesian coordinate system with mutually perpendicular X, Y and Z axes where the X axis coincides with the common axis of the flexible coupling, and the Y axis extends radially from the common axis, the clear portions of at least two of the support wires of the first set and / or at least two of the support wires of the second set extend in a direction where the X, Y and Z coordinates change.

In some embodiments of the present disclosure the clear portions of at least two of the support wires of the first set and / or at least two of the support wires of the second set are so orientated that they extend in a direction that is at a first angle to the radial direction relative to the common axis and at a second angle to a flat plane which is substantially perpendicular to the common axis, at least two of the support wires of the first set and / or at least two of the support wires of the second set are so orientated that they extend in a direction at a third angle to a flat plane which is substantially perpendicular to the common axis, and the first second and third angles are acute angles.

The orientation of the clear portions of the support wires of the first and / or second sets may be chosen to give rise to a desired level of angular and axial stiffness or resistance to bending in the coupling. The angular stiffness is the resistance to the axes of the spacer means and one or both of the first and second shaft engagement means not being parallel / coaxial. The axial stiffness is the resistance to movement in an axial direction between the spacer means and one or both of the first and second shaft engagement means.

For example the angular stiffness of the coupling is greater if the support wires in the first and / or second sets are not all radially extending than if they are all radially extending. Likewise, if at least some of the support wires of the first and / or second sets are orientated to extend at an angle to a radially extending flat plane which is substantially perpendicular to the common axis the axial stiffness is greater than if the support wires all extend along that flat plane.

In some embodiments of the present disclosure the support wires are formed from a composite material. In some embodiments that composite material comprises a fibre reinforced composite material. In some embodiments the fibres are carbon fibres and the composite material may be a carbon fibre composite material comprising carbon fibres and a matrix resin (available from Tokyo Rope International Inc.). Carbon fibre composite materials are advantageous for the support wires because of their high tensile strengths of between 3.5 and 7.0 GPa (which contrasts with a tensile strength for titanium of 434 MPa), their high strength to weight ratio, their long fatigue life, they have zero creep, they have very low elongation, a good chemical resistance, a low level of thermal expansion and a high temperature tolerance. In other embodiments the support wires may be formed from other fibres such as fiberglass, aramid (such as aramid cables available from fibremax.nl), polyester, aromatic polyester (such as VECTRAN (trade mark) (such cables are available from Applied Fibre Manufacturing LLC), or High Modulus Polyethylene (HMPE) (such as HMPE cables available from fibremax.nl).

In some embodiments of the present disclosure at least one of the first shaft engagement means, second shaft engagement means, and the spacer means are at least partially formed from a composite material. In some embodiments that composite material comprises a fibre reinforced composite material.

According to a second aspect of the present disclosure there is provided a flexible shaft suitable for use in an aircraft comprising a number of shaft elements and a number of couplings according to the first aspect of the present disclosure.

In some embodiments of the present disclosure the shaft elements are at least partially formed from a composite material. In some embodiments that composite material comprises carbon fibres.

According to a third aspect of the present disclosure there is provided an aircraft comprising at least one coupling according to the first aspect of the present disclosure.

The present disclosure will be further described and explained by way of example with reference to the accompanying drawings in which
Figure 1 shows an embodiment of an aircraft incorporating an embodiment of a coupling according to the present disclosure;
Figure 2 shows a first embodiment of a coupling according to the present disclosure;
Figure 3 shows a section of the coupling of Figure 2;
Figure 4 shows schematically a second embodiment of a coupling according to the present disclosure;
Figure 5 shows schematically a second view of the coupling of Figure 4;
Figure 6 shows schematically a third embodiment of a coupling according to the present disclosure, and
Figure 7 shows schematically a part of a fourth embodiment of a coupling according to the present disclosure.

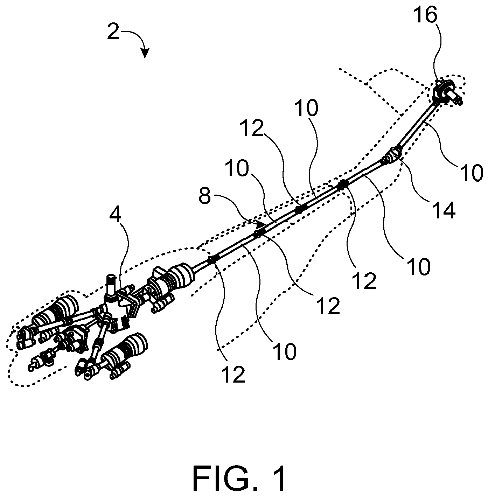

With reference to Figure 1, a helicopter 2 is provided with a main gearbox 4 for its main and tail rotors (not shown). The main gearbox 4 transmits torque to a tail rotor drive line 8 via a gearbox 6. The tail rotor drive line 8 is comprised of a number of shaft elements 10, a number of flexible couplings 12, and an intermediate gearbox 14. The couplings 12 join the ends of the shaft elements 10. In some configurations the flexible couplings 12 are integral parts with shaft elements 10.

The torque is transmitted from the main gearbox 4 to a tail rotor gearbox 16 which turns the tail rotor (not shown).

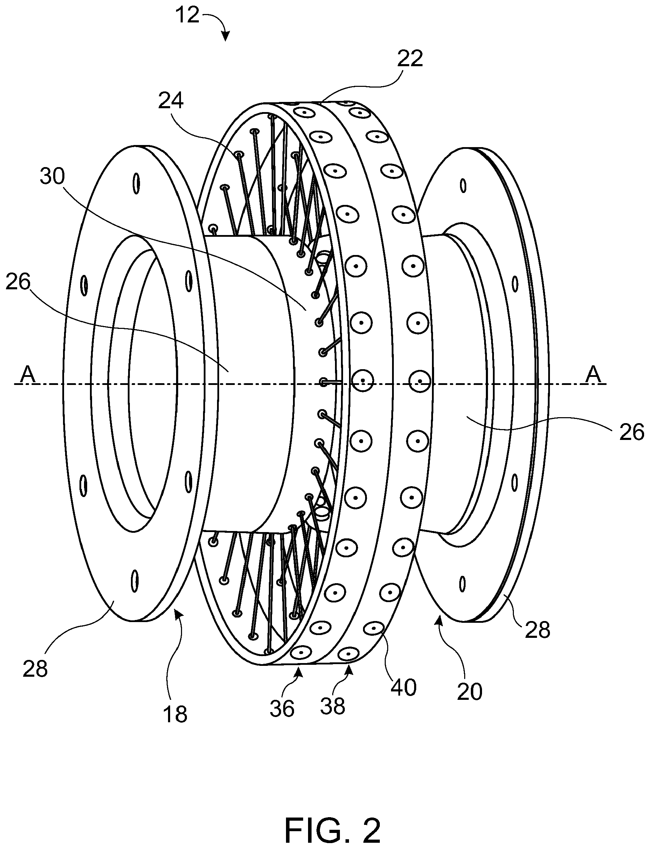

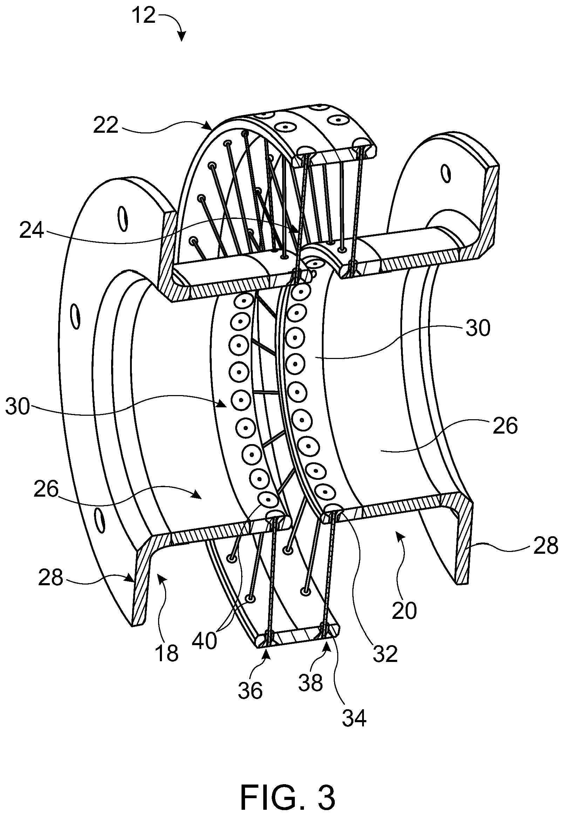

With reference to Figures 2 and 3, the flexible coupling 12 is comprised of a first shaft engagement means 18, a second shaft engagement means 20, a spacer means 22, and a plurality of support wires 24 (of which, for clarity, only one is labelled).

Each of the first and second shaft engagement means 18, 20 is formed from an engagement shaft 26 with an engagement flange 28 at the end of the engagement shaft 26 remote from the other of the shaft engagement means. The engagement shaft 26 and engagement flange 28 have a common central axis A. The engagement flange 28 is adapted to be attached to a similarly sized flange on the end of a shaft element 10.

At the end of the engagement shaft 26 proximal to the other end of the shaft engagement means is an anchoring zone 30. In the anchoring zone 30 are a plurality of anchor apertures 32 (again only one of which is labelled) passing through the engagement shaft 26 in a radial direction relative to common central axis A. Each anchor aperture 32 is counter sunk at its radially inner end. The anchor apertures 32 are evenly spaced around the outer circumference of the engagement shaft 26 and the central axis of each anchor aperture 32 in an engagement shaft lies on a radially extending flat plane that is perpendicular to the central axis A.

The spacer means 22 is cylindrical with a central axis that lies on the common central axis A, and the radially inner face of the spacer means 22 has a radius greater than the radius of the radially outer faces of the engagement shafts 26. The spacer means 22 includes a plurality of anchor apertures 34 (again only one of which is labelled) passing through the spacer means 22 in a radial direction relative to common central axis A. Each anchor aperture 34 is counter sunk at its radially outer end. The anchor apertures 34 are located in the spacer means 22 in first and second sets 36, 38 and the central axis of each anchor aperture 34 in the first set lies on a radially extending first flat plane that is perpendicular to the central axis A, and the central axis of each anchor aperture 34 in the second set lies on a second radially extending flat plane that is perpendicular to the central axis A.

The number of anchor apertures 32 in the engagement shaft 26 of the first engagement means 18 and the number of anchor apertures 34 in the first set 36 in the spacer means 22 are equal. The anchor apertures 34 in the first set 36 in the spacer means 22 are evenly spaced around the circumference of the spacer means 22, and the spacing of the anchor apertures 34 around the circumference of the spacer means 22 is such that when the first flat plane includes the central axis of the anchor apertures 32 of the first engagement means 18 each anchor aperture 34 can have a substantially common axis with an anchor aperture 32 when the pairs of anchor apertures 32, 34 are radially aligned with each other.

The same is true for the second engagement means 20 in that the number of anchor apertures 32 in the engagement shaft 26 of the second engagement means 20 and the number of anchor apertures 34 in the second set 36 in the spacer means 22 are equal. The anchor apertures 34 in the second set 36 in the spacer means 22 are evenly spaced around the circumference of the spacer means 22, and the spacing of the anchor apertures 34 around the circumference of the spacer means 22 is such that when the second flat plane includes the central axis of the anchor apertures 32 of the second engagement means 20 each anchor aperture 34 can have a common axis with an anchor aperture 32 when the pairs of anchor apertures 32, 34 are radially aligned with each other.

The first and second sets of anchor apertures 34 in the spacer means 22 are longitudinally spaced from each other at a predetermined distance. The predetermined distance is such that when the anchor apertures 32 of the first engagement means 18 lie on the first flat plane and the anchor apertures 32 of the second engagement means 20 lie on the second flat plane, the first engagement means 18 and the second engagement means 20 are separated by a predetermined distance.

Extending between the anchor apertures 32 and 34 of each pair of anchor apertures is a single pass support wire 24. That support wire 24 is anchored to spacer means 22 and engagement shaft 26 using an anchor means 40 which is configured to sit in anchor apertures 32 and 34. The support wires 24 are all tensioned to a predetermined tension.

In the embodiment of the present disclosure illustrated in Figures 2 and 3 the first and second engagement means 18, 20, the spacer means 22, and the support wires 24 are all formed from a carbon fibre composite material.

As may be seen from Figures 2 and 3, the clear portions of the support wires 24 of the coupling 12 are easily visible to a person viewing the coupling without any need for dissembling the coupling or removing it from the flexible shaft. This means that any damage to or failure of any of the wire supports is easily visible. If damage or failure occurs, then the damaged or failed support wire can be removed by cutting it and removing the support wire 24 and associated anchor means 40 from the anchor apertures 32, 34. If the anchor means 40 are reusable they may be reused with a new support wire 24, or a new support wire 24 and new anchor means 40 are used to replace the removed support wire 24 and means 40.

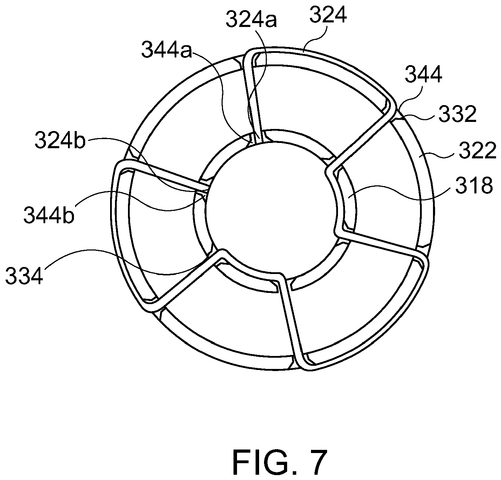

With reference to Figure 7, in a similar embodiment of the present disclosure, the support wire 324 is a single multiple pass support wire that pass through all the anchor apertures 332 in the illustrated anchoring zone of the spacer element 322 and all the anchor apertures 334 in the shaft engagement means 318.

The support wire has a first end 324a which is anchored to an anchor grommet 344a which fits snugly into a first anchor aperture 334, and a second end 324b which is anchored to an anchor grommet 344b which fits snugly into a second anchor aperture 334. The first and second ends 324a, 324b of the support wire 324 are anchored into the anchor grommets 344a and 344b by a known means such as by use of an appropriate adhesive.

Between the first and second ends 324a, 324b of the support wire 324 the support wire 324 passes through an anchor grommet 344 each time it passes through an anchor aperture 332 or 334. The anchor grommets 344 are, in some embodiments, fixed to the support wire 324 to prevent longitudinal movement of the support wire 324 through the anchor aperture 332 or 334 when in use. In other embodiments the anchor grommets 344 are not fixed to the support wire 324 and as such the support wire can move longitudinally through the anchor grommets 344. In all of these embodiments the anchor grommets 344 serve to protect the support wire 324 from abrasion on the spacer element 322 or shaft engagement means 318.

It will be understood that embodiments of flexible couplings with between 2 and n support wires (where n is the number of anchor apertures 332 in the spacer element 322) can be constructed in a similar fashion to that illustrated in Figure 7. In such embodiments each first end is anchored into an anchor grommet 344a and each second end into an anchor grommet 344b. It will be further understood that the anchor grommets 344a and 344b could be located in an anchor aperture in the spacer element instead of the shaft engagement means.

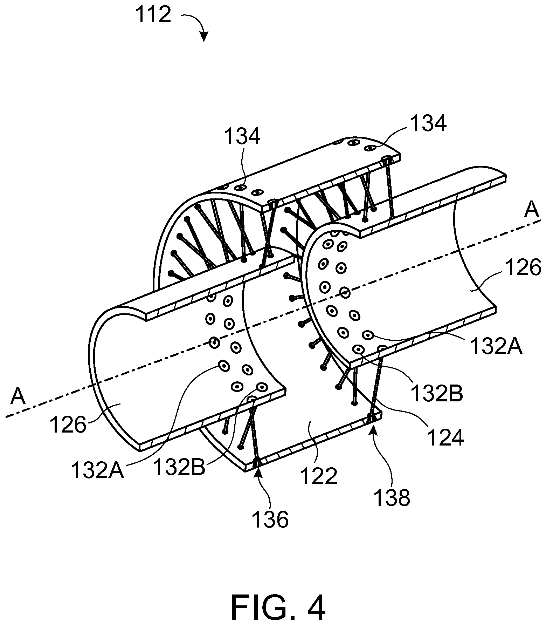

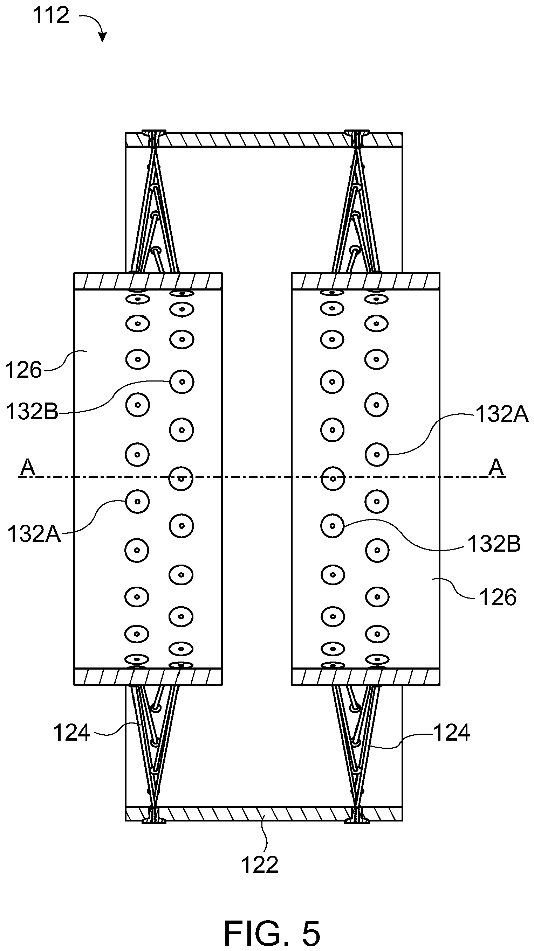

With reference to Figures 4 and 5, a flexible coupling 112 is schematically illustrated. The flexible coupling 112 is comprised of first and second shaft engagement means each having an engagement shaft 126. The engagement shafts 126 are coaxial with each other and spacer means 122. Each engagement shaft 126 includes anchor apertures 132A and 132B (for clarity only one of each is labelled for each engagement shaft) where the anchor apertures 132A are evenly spaced around the engagement shaft 126 along a first circumference, and the anchor apertures 132B are evenly spaced around the engagement shaft 126 along a second circumference. The first and second sets 136, 138 of anchor apertures 134 are evenly spaced around the spacer means 122. As discussed in connection with Figures 2 and 3 above, support wires 124 extend between pairs of anchor apertures 132, 134 and are anchored into those anchor apertures by anchor means. The difference between the coupling 112 and coupling 12 is that the support wires 124 do not all extend in a radial direction. At least some of the support wires 124 are angled to a flat plane perpendicular to the common axis A of the engagement shafts 126 and spacer means 122.

The schematically illustrated coupling 112 operates, is inspected and may be repaired in the same fashion as coupling 12 as discussed above.

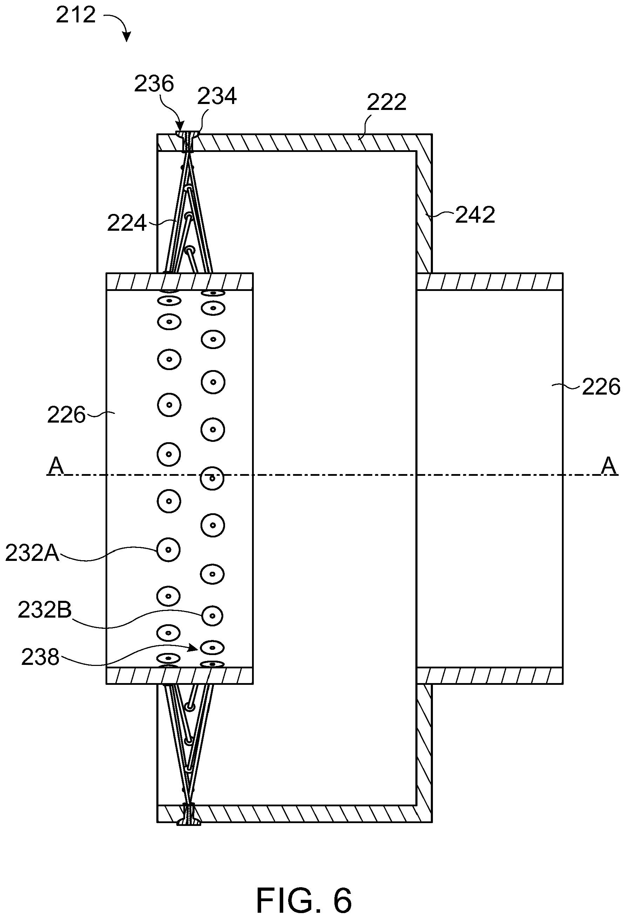

With reference to Figure 6, a flexible coupling 212 is schematically illustrated. The flexible coupling 212 is comprised of first and second shaft engagement means each having an engagement shaft 226. The engagement shafts 226 are coaxial with each other and spacer means 222. The first engagement shaft 226 includes anchor apertures 232A and 232B (for clarity only one of each is labelled) where the anchor apertures 232A are evenly spaced around the first engagement shaft 226 along a first circumference, and the anchor apertures 232B are evenly spaced around the first engagement shaft 226 along a second circumference. A set 236 of anchor apertures 234 are evenly spaced around the spacer means 222. As discussed in connection with Figures 2 and 3 above, support wires 224 extend between pairs of anchor apertures 232, 234 and are anchored into those anchor apertures by anchor means. The support wires 224 do not all extend in a radial direction. At least some of the support wires 224 are angled to a flat plane perpendicular to the common axis A of the engagement shafts 126 and spacer means 122.

The spacer means 222 also includes a fixed flange 242 extending between and fixed to the spacer means 222 and the engagement shaft 226 of the second engagement means. The fixed flange 242 replaces the support wires for the second engagement means.

The schematically illustrated coupling 212 operates, is inspected and may be repaired in the same fashion as coupling 12 as discussed above.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure.

Various aspects of the fuel filters disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A coupling (12) suitable for use in a flexible shaft (8) comprises a first and second shaft engagement means (18, 20) each having a central axis (A), a spacer means (22) having a central axis (A), and a number of support wires (24), in which a first set (36) of support wires (24) each extend between the first shaft engagement means (18) and the spacer means (22) one or more times, the first set (36) of support wires (24) comprises at least one support wire (24), and the first and second shaft engagement means (18, 20) and the spacer means (22) have a common axis (A) when the coupling means (12) is not subject to any misalignment.

2. A coupling according to claim 1 in which a second set (38) of support wires (24) extend between the second shaft engagement means (20) and the spacer means (22) one or more times, , and the second set (38) of support wires (24) comprises at least one support wire (24).

3. A coupling according to claim 1 in which a rigid flange (242) extends between the spacer means (222) and the second shaft engagement means, and the rigid flange (242) is rigidly connected to or integral with the spacer means (222) and the second shaft engagement means.

4. A coupling according to any of claims 1 to 3 in which at least one of the support wires (24) has a first and second end,
the first end of each of the at least one support wires (24) is anchored to the spacer means (22),
the second end of each of the at least one support wires (24) is anchored to a shaft engagement means (18), and
each of the at least one support wires (24) each extend between the first shaft engagement means (18) and the spacer means (22) once.

5. A coupling according to any of claims 1 to 4 in which at least one of the support wires (24) has a first and second end,
the first end of each of the at least one support wires (24) is anchored to one of the spacer means (22) or a shaft engagement means (18),
the second end of each of the at least one support wires (24) is anchored to one of the spacer means (22) or a shaft engagement means (18), and
each of the at least one support wires (24) each extend between the first shaft engagement means (18) and the spacer means (22) more than once.

6. A coupling according to any of claims 1 to 5 in which at least one of the support wires (24) is in tension.

7. A coupling according to any of claims 1 to 6 in which each end of the support wires (24) is anchored to the spacer means (22) or a shaft engagement means (18, 20) by an anchor means (40), in which each of the anchor means (40) is adapted to allow the removal and replacement of the support wire (24) that it is anchoring without having to remove any of the other support wires (24).

8. A coupling according to any of claims 1 to 7 in which one or both of the clear portion of at least one of the support wires (24) of the first set (36) and the clear portion of at least one of the support wires of the second set (38) extend radially relative to the common axis (A).

9. A coupling according to any of claims 1 to 8 in which one or both of the clear portion of at least one of the support wires (24) of the first set (36) and the clear portion of at least one of the support wires (24) of the second set (38) are so orientated that each of the at least one support wires (24) lie on a flat radially extending plane which is substantially perpendicular to the common axis (A), extend in a direction that is at an angle to a radial direction relative to the common axis, and
that angle is an acute angle.

10. A coupling according to any of claims 1 to 9 in which the clear portion of at least one of the support wires (24) of the first set (36) and the clear portion of at least one of the support wires (24) of the second set (38) are so orientated that each of the at least one support wires (24):
lies on a flat plane on which the common axis (A) sits and which extends in a radial direction relative to the common axis (A),
extends in a direction that is at a second angle to a flat radially extending plane which is substantially perpendicular to the common axis (A), and
that second angle is an acute angle

11. A coupling according to any of claims 1 to 10 in which one or both of the clear portions of at least one of the support wires (24) of the first set (36) and the clear portion of at least one of the support wires (24) of the second set (38) are so orientated that:
each of the at least one support wires (24) extend in a direction that is at a first angle to a flat plane on which the common axis (A) sits and which extends in a radial direction relative to the common axis(A),
each of the at least one support wires (24) extend in a direction that is at a second angle to a radially extending flat plane which is substantially perpendicular to the common axis (A), and
the first and second angles are both acute angles.

12. A coupling according to claim 10 or 11 in which the clear portions of at least one of the support wires (24) of the first set (36) and / or at least one of the support wires (24) of the second set (38) are so orientated that each of the at least one support wires (24) support wires (24) extend in a direction at a third angle to a radially extending flat plane which is substantially perpendicular to the common axis (A), and that third angle is an acute angle.

13. A coupling according to any of claims 1 to 12 in which at least one of the support wires (24), the first shaft engagement means (18), second shaft engagement means (20), and the spacer means (22) are at least partially formed from a fibre reinforced material.

14. A flexible shaft (8) suitable for use in an aircraft (2) comprising a number of shaft elements (10) and a number of couplings (12) according to any of claims 1 to 13.

15. A flexible shaft according to claim 14 in which the shaft elements (10) are at least partially formed from a fibre reinforced material.
